# EUROPEAN PATENT APPLICATION

(11) **EP 1 862 276 A1**
(43) Date of publication of application: **05.12.2007**
(21) Application number: 07109160.7
(22) Date of filing: 30.05.2007
(51) Int. Cl.: B27B 25/04, B65G 15/64

(54) **Longitudinal conveyor for an edger**

(30) Priority: 31.05.2006 FI 20060529
(71) Applicant: Oy Ekspansio Engineering Limited, 04250 Kerava (FI)
(72) Inventor: PAAVOLA, Jyri, FI-04340, Tuusula (FI)
(74) Representative: Tanhua, Pekka Vilhelm

(57) **Abstract**

The invention relates to a longitudinal conveyor for feeding a woodsawn cant (9) in a lengthwise direction of the cant to an edging saw (30). The longitudinal conveyor (1) includes an underside conveyor chain (33), having a top surface (3y) adapted for contact with the external surface of cants, as well as an upper counter conveyor (10) which comprises an up-perside conveyor belt (34) and at least two drive rolls (5a, 5b) around which the conveyor belt proceeds to form a loop, which is co-directional with the conveyor chain and includes a bottom section (12) with its downward surface (4a), as well as a top section (13). The longitudinal conveyor (1) includes also at least three press units (6a, 6b, 6c...) urged with an elastic press force (Fp) acting against said bottom section (12) of the conveyor belt and towards the top surface of the conveyor chain, and a motor (20) coupled with at least one drive roll, by means of which said conveyor belt is movable (M) co-directionally with the conveyor chain.

## Description

The invention relates to a longitudinal conveyor for feeding a woodsawn cant in a lengthwise direction of the cant to an edging saw, the longitudinal conveyor comprising: a fixed frame structure; an underside conveyor chain, having a top surface adapted for contact with the external surface of cants; and an upper counter conveyor, having movable members with an external surface adapted for contact with the external surface of cants, as well as springy force members, allowing for an elastic displacement of the movable members away from the top surface of said conveyor chain and at the same time producing a press force towards the top surface of said conveyor chain.

In the process of cutting a log of timber for planks, boards, laths or the like, the log is generally first dressed, i.e. it is sawn for at least two, but usually four flat and pairwise parallel outer faces which, in order to achieve a good sawing yield, do not, however, normally coincide with each other but, instead, the log is left with a somewhat roundish surface segment. Guided by these outer faces, the log is then sawn to produce for example cant boards or cant planks, which include or may include some so-called wane edge. The "wane edge" implies that the edges of a sawn-off cant are not, over the entire height thereof, perpendicular to the cant's top surface and bottom surface planes. If the cants were sawn off a log straight away, without producing the above-mentioned flat outer faces, every cant would end up with a wane edge. Next, the cutting process thus includes the edging of cant planks or cant boards in an "edger" or an edging saw for the cant, the board or plank having its edges dressed and trimmed by removing the cant's wane edges. Subsequently in this specification, the concept "cant" is used to stand for an undressed plank, board or lath sawn off a tree trunk, because in most cases the lateral dimensions constitute the only factor distinguishing these from each other. In any event, the cant is subjected to further longitudinal sawing operations. Guiding such a cant to a further sawing process presents problems since, as a result of the wane edge, the cants are perhaps not consistent in width, nor are the edges even straight.

Patent publication US 5,785,102 concerns an edger of this type, but in actual fact it describes a positioning apparatus for an elongated cant, whereby cants are conveyed transversely to a position designated therefor in the process of feeding the cants into an edger. In general, the described apparatus comprises: a frame structure; a conveying module for transversely conveying the cant along a substantially straight path; a scanning module located along the path for optically scanning the morphology of the cant and providing morphology data; a computer module linked to the scanning means for analyzing the morphology data and calculating a longitudinal preferred infeed line for said cant; and a positioning means located further along the path for transversely positioning the cant in a colinear relationship with the preferred infeed line for said cant. More specifically, the positioning means comprises a plurality of movable pinching members for correctly aligning the cants, whereafter the positioned cants are longitudinally advanced on a longitudinal conveyor into the edging device. In the cited publication, this longitudinal conveyor is of a conventional type, consisting of a lower double-chain traveling along a fixed chain slot and carrying the cants on top of it, and upper feeding rollers pressing the cants against the double-chain for a firm frictional contact between the double-chain and the cants.

The commonly employed longitudinal conveyors, which consist of a lower conveyor chain and a plurality of spring-loaded overhead press rollers, present a problem that, at some point of the conveying path, the cants may be dislodged sideways, i.e. transversely to the length of a cant, either completely or partially. As a result of this, the wane edge is not removed completely by the edger from one edge of the cant and some full-edged portion shall be unnecessarily removed from the other. This, in turn, increases loss and incurs also other extra costs in terms of inspections and possible re-sawing operations. Another problem involved in the use of these press rollers is the necessity to lift each roller just before the leading end of a moving cant reaches a position in line with the roller, since otherwise the board end collides with the roller and may halt completely, and then to depress the roller quickly enough for having it pinch the cant against the conveyor chain before the board has passed by. Such a control requires massive and extensive control technology, which again adds to fault sensitivity and costs.

It is an objective of the invention to provide such a longitudinal conveyor for feeding a woodsawn cant in a lengthwise direction of the cant to an edging saw or other similar finishing saw, which, after the completed positioning of cants, prevents as effectively as possible an undesired shift or displacement of the discussed cants in this conveyor in a direction transverse to the length thereof. A second objective of the invention is to provide this type of longitudinal conveyor, which would not require an electronic or the like control system to control various sections of the conveyor according to the advancement of a cant.

The above problems can be eliminated and the above objectives accomplished by an apparatus of the invention, which is characterized by what is defined in the characterizing clause of claim 1.

The invention will now be described in detail with reference to the accompanying drawings.

Fig. 1 shows generally a preferred embodiment for a longitudinal conveyor of the invention in an axonometric view.

Figs. 2A-2B show by way of example a wane-edged cant, the likes of which are typically carried by a longitudinal conveyor of the invention, firstly in a plan view from a direction I in figs. 2A and 3A and secondly in a cross-section along a plane II-II in fig. 2B.

Figs. 3A-3C show a front section for the longitudinal conveyor of fig. 1 in three different operating conditions as a cant arrives in the conveyor and on its way therethrough, in a side view from a direction III in fig. 1.

Figs. 4A-4B show two embodiments for a press unit included in a longitudinal conveyor of the invention in contact with self-guided cogged V-belts of two different types, in cross-sections along a plane IV-IV in fig. 3B.

Fig. 5 shows a drive roll for one type of self-guided cogged V-belt applicable in a longitudinal conveyor of the invention with the belt on top of it partially cut away, in an axonometric view.

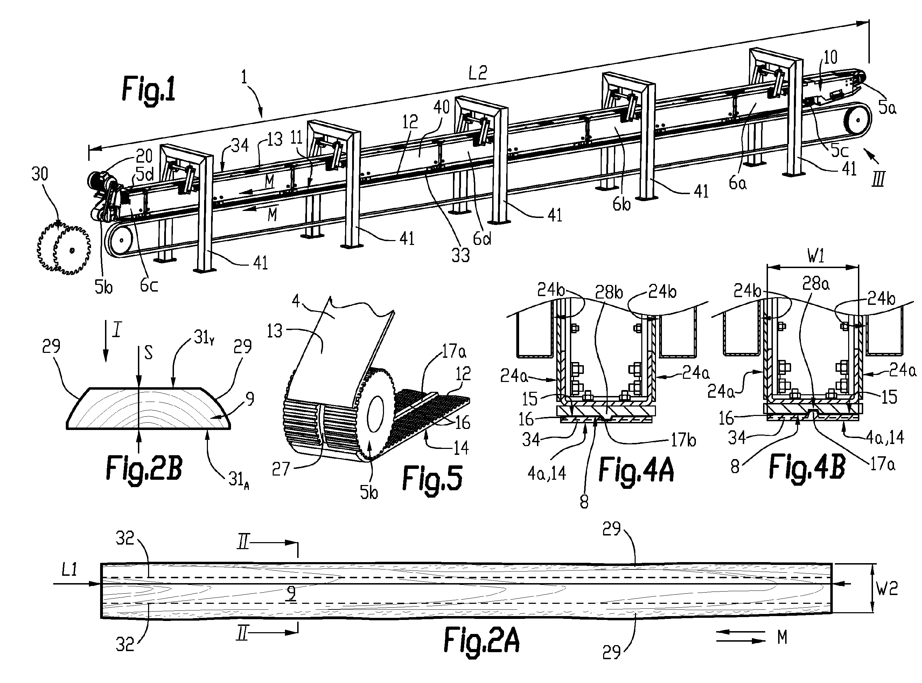

Thus, the longitudinal conveyor is used for feeding woodsawn semifinished planks or boards or the like, typically cants 9 in a lengthwise direction L1 of the cants to an edging saw 30, wherein the cants are stripped of wane edges 29, i.e. edge portions 29 of the cant slanted with respect to a top surface 31y and a bottom surface 31_{A} and often unequal in width, along parallel cutting lines 32 as can be appreciated on the basis of figs. 2A and 2B. In this context, the timber arriving at a longitudinal conveyor 1, regardless of its cross-dimensions W2 and S, shall be referred to as a cant 9. However, the cant has always a length L1 which is manifold relative to its width W2 and thickness S. Upstream of this longitudinal conveyor 1, the cant has been measured and analyzed, as well as set in such a position that the calculated cutting lines are in correct positions with respect to the edging saw 30 downstream of the longitudinal conveyor. These measuring and analyzing systems, as well as positioning elements for cants, which are located upstream of the longitudinal conveyor 1 carrying the cant 9 to an edging saw, can be of any conventional or new appropriate type and hence not explained here in further detail. The longitudinal conveyor comprises first of all an underside conveyor chain 33, having a top surface 3y adapted for contact with the external surface of cants. The underside conveyor chain 33 extends around rolls, not shown in the figures, to establish a loop and the loop's upper run forms the planar top surface 3y, against which the cant's 9 bottom surface 31_{A} settles for the duration of transport. The underside conveyor chain 33 can be of any conventional or new appropriate type and hence not explained here in further detail. Secondly, the longitudinal conveyor comprises an upper counter conveyor 10, having movable members with an external surface adapted for contact with the external surface of cants, thus, in this case with the cants' top surface 31y, as well as springy force members 11, allowing for an elastic displacement of these movable members away from the top surface 3y of the conveyor chain 33, yet capable of producing a press force Fp towards the top surface of said conveyor chain. The cants 9 are delivered in between the underside conveyor chain 33 and the upper counter conveyor 10, of which the underside conveyor chain does not flex in a vertical direction H1=H2, while the upper counter conveyor 10 flexes in the vertical direction H1=H2 and generates the press force Fp, whereby the cants 9 are pressed against the conveyor chain 33. Said vertical direction is perpendicular to a conveying direction M and parallel to the thickness S of a cant. The longitudinal conveyor comprises a fixed frame structure 41, having at least the upper counter conveyor 10, but generally also the underside conveyor chain 33 attached thereto.

According to the invention, the above-mentioned movable members of the upper counter conveyor 10 comprise an upperside conveyor belt 34 and at least two drive rolls 5a, 5b spaced from each other by a distance L2 co-directional with the conveyor chain 33, the upperside conveyor belt 34 extending around said drive rolls 5a and 5b to establish a loop co-directional with the conveyor chain. This loop i.e. the upperside conveyor belt 34 includes a bottom section 12 with its bottom surface 4a, as well as a top section 13. The bottom section 12 has its bottom surface 4a located opposite to the underside conveyor chain's 33 top surface 3y in such a way that, when there is no cant present between the conveyor chain's top surface 3y and the conveyor belt's bottom surface 4a, a distance V between the top surface 3y and the bottom surface 4a is less than the thickness S of a cant, whereby the distance V can be a zero or approach a zero or a contact, as can be appreciated from fig. 3A when examining the zone of a press unit 6d. On the other hand, when there is a cant 9 present between the conveyor chain's top surface 3y and the conveyor belt's bottom surface 4a, the distance V between the top surface 3y and the bottom surface 4a is of course the same as the cant's thickness S, as can be appreciated from fig. 3C when examining the zone of press units 6a, 6b. The distance V is considered in a vertical direction H1. The above-mentioned springy force members 11 comprise at least three press units 6a, 6b, 6c, 6d... urged with an elastic press force Fp against said bottom section 12 of the conveyor belt, one press unit 6a of which lies first in the conveying direction M or is located at the forward end of a main girder 40, i.e. at that end of an assembly established by the upperside conveyor belt 34 and the underside conveyor chain 33 by which the cants 9 enter the longitudinal conveyor 1, and one press unit 6c of which lies last in the conveying direction M or located at the rear end of the main girder 40, i.e. at that end of an assembly established by the upperside conveyor belt 34 and the underside conveyor chain 33 by which the cants 9 leave the longitudinal conveyor 1. Furthermore, the upper counter conveyor 10 comprises a motor 20 coupled with at least one drive roll 5a or 5b, whereby said conveyor belt 34 is driven in the conveying direction M which is parallel to the conveyor chain and the conveyor belt, more specifically to the conveyor chain's to section and the conveyor belt's bottom section 12.

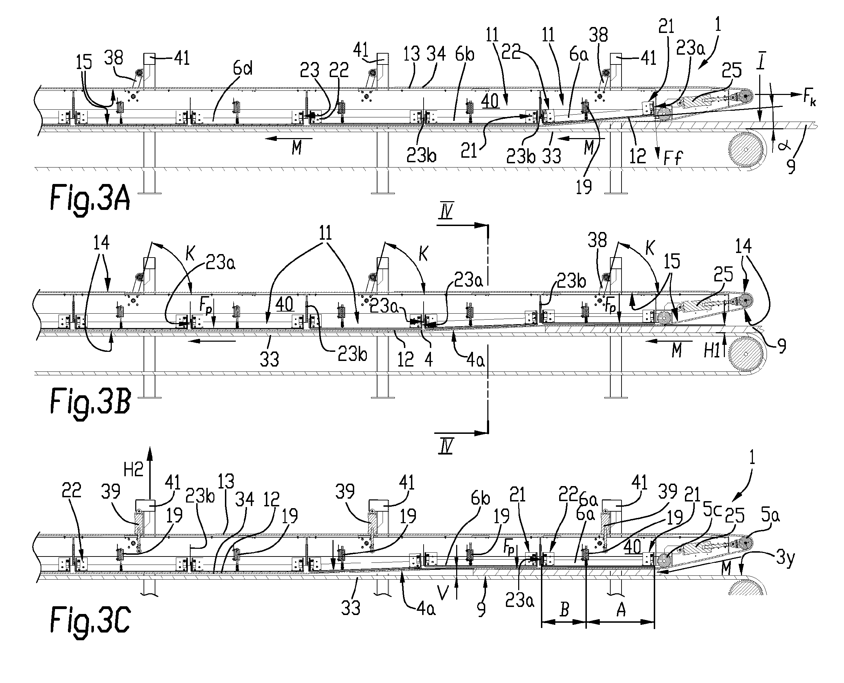

In particular, according to the invention, the conveyor belt 34 is a self-guided cogged V-belt, wherein an outer loop surface 14, which constitutes said bottom surface 4a, is a smooth or rough, flat friction surface as can be seen in figs. 4A, 4B and 5. When the outer surface 14, which provides the conveyor belt's 34 bottom surface 4a, is during the course of conveyance pressed against a top surface 31_{Y}, no relative movement can result therebetween. Hence, at least over that part of a width W1, which is consistent with the width W2 of a cant, the flat friction surface provides one means of preventing an unintended, undesired jolt of the cant 9 in the lateral direction W1 of the belt or transversely of the conveyor. The conveyor belt 34 has its opposite side, i.e. an inner loop surface 15, consisting of a cross-serration 16 and one or more lengthwise wedge ribs 17a or wedge grooves 17b. Fig. 4A visualizes as cogged V-belt with one wedge groove 17b or fig. 4B visualizes a cogged V-belt with one wedge rib 17a, but it should be understood that several of such wedge grooves and/or wedge ribs can exist in the lateral direction W1 of the belt. At least the drive roll 5b coupled with the motor 20 is a cogged roll, which is provided with circumferential groove(s) 27 or rib/ribs consistent with the wedge rib/ribs or wedge groove/grooves of the conveyor belt 34. Consequently, the motor 20 is capable of driving the upperside conveyor belt's 34 bottom section 12 in the conveying direction M and carrying along the cant 9 and, further, driving the top section of the under-the-cant conveyor chain 33 in the conveying direction M at the same rate of speed. The above-mentioned circumferential groove/grooves or rib/ribs of the drive roll or drive rolls is/are also one means of preventing an unintended, undesired jolt of the cant 9 in the belt's lateral direction W1 or transversely of the conveyor.

Further according to the invention, the above-mentioned press units 6a, 6b, 6c... of the springy force members 11 comprise a bottom sliding surface 8, against which the inner surface 15 of the conveyor belt's 34 loop is capable of sliding and which is provided with a groove(s) 28a or a rib/ribs 28b, which is/are co-directional with the distance L2 or parallel to the conveying direction M and consistent with the wedge rib/ribs or wedge groove/grooves of the conveyor belt, as visualized in figs. 4A and 4B. The above-mentioned circumferential groove/grooves or rib/ribs of the press units is/are a further means of preventing an unintentional, undesired jolt of the cant 9 in the belt's lateral direction W1 or transversely of the conveyor. The springy force members 11 also comprise, at forward and rear ends of each press unit 6a, 6b, 6c... as viewed in the conveyor belt's conveying direction M, front guides 21 and back guides 22 between the press unit and the main girder. The front guides 21 and the back guides 22 are provided with vertical H1=h2 first counter bearing surfaces 24a co-directional with the distance L2, and the main girder 40 is provided with first counter bearing surfaces 24b also co-directional with the distance L2, i.e. extending in the conveying direction M. The vertical bearing surfaces 24a and 24b allow for a displacement of the press units in the vertical direction H1=H2, yet prevent effectively a displacement in a direction transverse to the conveying direction M, i.e. in the direction of the widths W1, W2, as clearly depicted in figs. 4A and 4B. The mutual bearing surfaces 24a and 24b of the press units and the main girder are a yet further means of preventing an unintentional, undesired movement of the cant 9 in the lateral direction W1 or transversely of the conveyor. The front guides 21 and the back guides 22 are also provided with vertical second bearing surfaces 23a and the main girder 40 with second counter bearing surfaces 23b, both extending in a direction orthogonal to the distance L2. These are able to preclude a displacement of the press units 6a, 6b, 6c, 6d... in the conveying direction M despite the frictional forces acting that way.

The longitudinal conveyor 1 of the invention includes a special main girder 40, which is mounted on the fixed frame structure 41 in a subsequently described manner. The main girder 40 is an elongated rigid beam structure, having its length extending in the conveying direction M of the underside conveyor chain 33 and of course in that of the upperside conveyor belt 34. The at least two drive rolls 5a, 5b of the conveyor belt 34 are bearing-mounted on this main girder at the distance L2 from each other, i.e. on the forward end of the main girder and on the rearward end of the main girder. If the structure includes more drive rolls, such as four drive rolls 5a, 5b, 5c, 5d, the outermost of those, i.e. for example the first upper drive roll 5a and the second underside drive roll 5b, are bearing-mounted on the main girder 40 at the distance L2 from each other. The other drive rolls are also bearing-mounted on the main girder, but at a slightly lesser distance from each other. It should be noted, however, that the extent of the conveyor belt's 34 bottom section 12, which carries the above-described press units 6a, 6b, 6c, 6d..., does not include drive rolls as the latter are preferably included in the end regions of the main girder. Thus, for example, the first upper drive roll 5a and the first lower drive roll 5c are present in the forward end region of the main girder 40 and the second upper drive roll 5d and the second lower drive roll 5b are present in the rearward end region of the main girder 40. The forward end and the rearward end are after all regarded in relation to the conveying direction, the cants being supplied by the forward end and discharged by the rearward end. Hence, along the bottom section 12, the conveyor belt is for the most part only guided by means of the press units.

The springy force members 11 comprise at least one pneumatic or hydraulic cylinder assembly 19 or a mechanical spring assembly between the main girder 40 and each press unit 6, as shown in figs. 3A-3C. Preferably, the springy force members, i.e. a pneumatic or hydraulic cylinder assembly or a spring assembly, are elements capable of producing a constant elastic press force Fp. This type of constant force elements are known as such, so the internal construction thereof shall not be further discussed. The cylinder assemblies 19 are set between the front guide 21 and the back guide 22 of each press unit, closer to the back guide, such that there is a distance A between the assembly and the front guide and a distance B between the assembly and the back guide, wherein A>B. This is a preferred type of design for the reason that shall be discussed presently. In this context the term elasticity is used in reference to the ability of a cylinder assembly or a spring assembly to simultaneously flex away and to sustain the press force Fp. Such an action is typical of various suspension systems, at least within certain limits.

At least one of the two drive rolls or one of the upper drive rolls 5a or 5d is coupled with the main girder by means of a tightener 25, for example by means of a horizontally working tightener, which produces a tightening force Fk. Being evenly distributed between the conveyor belt's top section 13 and bottom section 12, the tightening force creates in the conveyor belt 34 a tension force Fk/2, having a vertical component Fv = Fk/2×sinα at the front guide 21 of the foremost guide 6a, when the angle α is an angle formed between the intersection point of a vertical line for the foremost press unit's 6a back guide 22 and the underside conveyor chain's 33 top surface 3y and a connecting line for the bottom side of either the single foremost drive roll 5a or the lower drive roll 5c of the foremost drive rolls 5a, 5c and the conveyor chain's 33 top surface 3y. When said vertical component Fv is greater than a component force Ff = FpxB/(A+B) of said press force at the front guide 21 of the foremost press unit 6a but lesser than said press force Fp, the result is that the foremost press unit's 6a leading edge rises to the same level or almost to the same level as the bottom side of the single foremost drive roll 5a or the lower drive roll 5c of the foremost drive rolls, but the foremost press unit's trailing edge remains in contact or almost in contact with the underside conveyor chain's 33 top surface 3y. This condition is depicted in fig. 3A. When the bottom side of the single foremost drive roll 5a or the lower drive roll 5c of the foremost drive rolls is spaced by a vertical distance H1 from the conveyor chain's top surface 3y, which vertical distance H1 is greater than the thickness S of a cant, there will be ample space for the cant 9 to enter between the upperside conveyor belt 34 and the underside conveyor chain 33, more specifically between the conveyor belt's bottom surface 4a and the conveyor chain's top surface 3y. At this point, the conveyor belt is capable of having its bottom surface 4a grab a hold of the cant's 9 top surface 31y, the cant being consequently pulled by the belt into a gap between the upperside conveyor belt and the underside conveyor chain. As the upperside conveyor belt continues to pull the cant, the foremost press unit's 6a trailing edge rises by itself, the next press unit's 6b leading edge and trailing edge rise by themselves, etc. as the cant 9 advances in the longitudinal conveyor while the press units maintain a sufficient press force Fp, i.e. keep pressing the cant against the conveyor chain's top surface 3y. These subsequent stages are visible in figs. 3B and 3C. By virtue of an upperside conveyor belt, the entire passage of a cant is continuous and smooth and, in addition, the above-described conveyor components are not themselves capable of moving in a direction perpendicular to the length of a cant, nor allow for a jolt of the cant in the lateral direction W2.

The main girder 40 is braced to the fixed frame structure 41 by pairs of levers 38 or by adjuster screws or adjuster bolts 39. If the pairs of levers 38 are used, one lever of the pair of levers on one side of the main girder and the other lever on the other side of the main girder, the pairs of levers will be of the type capable of being deflected or tilted in a plane co-directional with the conveying direction M and perpendicular to the conveyors' 33, 34 top and bottom surfaces 3y and 4a. When a deflection angle K with respect to the direction of said distance L2 and the conveying direction M is adjustable, the vertical distance H1 can be adjusted to fit the thickness S of a cant. If the adjuster screws and adjuster bolts 39 are used, which typically come also in pairs, one screw-bolt assembly on one side of the main girder and the other screw-bolt assembly on the other side of the main girder, the screw-bolt assembles will be of such a type that the effective length H2 thereof can be used for changing the elevation of the main girder in a direction perpendicular to the conveyors' 33, 34 top and bottom surfaces 3y and 4a, so this feature can also be used for setting the vertical distance H1 to fit the thickness S of a cant.

## Claims

1. A longitudinal conveyor for feeding a woodsawn cant (9) in a lengthwise direction of the cant to an edging saw (30), the longitudinal conveyor (1) comprising:
- a fixed frame structure (41);
- an underside conveyor chain (33), having a top surface (3y) adapted for contact with the external surface of cants; and
- an upper counter conveyor (10), having movable members with an external surface adapted for contact with the external surface of cants, as well as springy force members (11), allowing for an elastic displacement of the movable members away from the top surface of said conveyor chain and being capable of producing a press force (Fp) towards the top surface of said conveyor chain,
**characterized in that**
- said movable members comprise an upperside conveyor belt (34) and at least two drive rolls (5a, 5b) spaced from each other by a distance (L2) co-directional with the conveyor chain (33), the upperside conveyor belt proceeding around said drive rolls to form a loop, which is co-directional with the conveyor chain, includes a bottom section (12) with its downward surface (4a) as well as a top section (13); **in that**
- said springy force members (11) comprise at least three press units (6a, 6b, 6c...) urged with the elastic press force (Fp) to act against said bottom section (12) of the upperside conveyor belt and towards the top surface of the conveyor chain; and **in that**
- the upper counter conveyor (10) further comprises a motor (20) coupled with at least one drive roll (5a or 5b), whereupon said upperside conveyor belt (34) is movable (M) co-directionally with the conveyor chain.

2. A longitudinal conveyor as set forth in claim 1, **characterized in that** said upperside conveyor belt (34) is a self-guided cogged V-belt, wherein an outer surface (14) of the loop, which forms said bottom surface (4a), is a smooth or rough, flat friction surface, and an inner surface (15) of the loop has a cross-serration (16) and one or more longitudinal wedge ribs (17a) or wedge grooves (17b); and **in that** at least the motor-coupled drive roll (5b) is a cogged roll, which is provided with circumferential groove(s) (27) or rib(s) consistent with the wedge rib/ribs or wedge groove/grooves of said upperside conveyor belt (34).

3. A longitudinal conveyor as set forth in claim 1 or 2, **characterized in that** said press unit or said press units (6a, 6b, 6c...) of the springy force members (11) comprise a bottom sliding surface (8), against which the inner surface (15) of the upperside conveyor belt's (34) loop is capable of sliding and which is provided with groove(s) (28a) or rib(s) (28b), which is/are co-directional with said distance (L2) and consistent with the wedge rib/ribs or wedge groove/grooves of the upperside conveyor belt.

4. A longitudinal conveyor as set forth in claim 2 or 3, **characterized in that** said springy force members (11) comprise at least one pneumatic or hydraulic cylinder assembly (19) or a mechanical spring assembly between the frame structure (34) and each press unit (6); and **in that** said springy force members are elements capable of producing a constant press force (Fp).

5. A longitudinal conveyor as set forth in any of the preceding claims, **characterized in that** it comprises a main girder (40), to which at least the upper counter conveyor (10) is attached; and **in that** said springy force members (11) comprise, at the leading and trailing ends of each press unit, as viewed in the conveyor belt's proceeding direction (M), front guides (21) and back guides (22) between the press unit and the main girder (40), which guides are provided with vertical first bearing surfaces (24a) co-directional with the distance (L2) and first counter bearing surfaces (24b) in the main girder, as well as vertical second bearing surfaces (23a) in a lateral direction (W) orthogonal to the distance and second counter bearing surfaces (23b).

6. A longitudinal conveyor as set forth in claim 4, **characterized in that** said cylinder assemblies (19) or spring assemblies are positioned between the front guide (21) and the back guide (22) of each press unit, closer to the back guide; and **in that** the springy force members (11) have a construction which allows, while sustaining said elastic press force (Fp), for an elastic displacement of the press units and the upperside conveyor belt away from the underside conveyor chain.

7. A longitudinal conveyor as set forth in any of the preceding claims, **characterized in that** it comprises four drive rolls (5a, 5b, 5c, 5d), of which the first upper drive roll (5a) and the first lower drive roll (5c) are located in a leading end region of the main girder (40) and the second upper drive roll (5d) and the second lower drive roll (5b) are located in a trailing end region of the main girder (40).

8. A longitudinal conveyor as set forth in any of the preceding claims, **characterized in that** at least one of the two drive rolls or one of the upper drive rolls (5a or 5d) is coupled with the main girder (40) by means of a tightener (25); and **in that** the tightener provides a tightening force (Fk), the tension force produced thereby on the upperside conveyor belt (34) having a vertical component (Fv = Fk/2xsinα) which is greater than a component force (Ff = FpxB/(A+B)) of the press force at the front guide (21) of the foremost press unit (6a) but smaller than said press force (Fp).

9. A longitudinal conveyor as set forth in any of the preceding claims, **characterized in that** the main girder (40) is braced to the fixed frame structure (41) by pairs of levers (38) or by adjuster screws or bolts (39); and **in that**
- a deflection angle (K) of said lever assemblies with respect to the direction of said distance (L2) is adjustable, or
- an effective length (H2) of the adjuster screws/bolts in vertical direction is adjustable,
whereby the spacing between the main girder (40), and hence the upperside conveyor belt's (34) bottom section (12), and the underside conveyor chain (33) is adjustable according to the thickness of a cant (9) to be conveyed therethrough.
